(19) Europäisches Patentamt / European Patent Office / Office européen des brevets

(11) **EP 2 682 821 B1**

(12) **EUROPEAN PATENT SPECIFICATION**

(45) Date of publication and mention
of the grant of the patent:
**29.06.2016 Bulletin 2016/26**

(21) Application number: **12752554.1**

(22) Date of filing: **19.01.2012**

(51) Int Cl.:
*G03G 15/08* (2006.01)    *F16C 13/00* (2006.01)
*G03G 15/00* (2006.01)    *G03G 21/10* (2006.01)

(86) International application number:
**PCT/JP2012/000304**

(87) International publication number:
**WO 2012/117659 (07.09.2012 Gazette 2012/36)**

(54) **CONDUCTIVE ROLLER, DEVELOPING DEVICE, AND IMAGE FORMING DEVICE**

LEITFÄHIGE WALZE, ENTWICKLUNGSVORRICHTUNG UND BILDERZEUGUNGSVORRICHTUNG

ROULEAU CONDUCTEUR, DISPOSITIF DE DÉVELOPPEMENT ET DISPOSITIF DE FORMATION D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.03.2011 JP 2011046695**

(43) Date of publication of application:
**08.01.2014 Bulletin 2014/02**

(73) Proprietors:
• **Shin-Etsu Polymer Co. Ltd.**
  **Tokyo 101-0041 (JP)**
• **Dainichiseika Color & Chemicals Mfg. Co., Ltd.**
  **Chuo-ku**
  **Tokyo 103-8383 (JP)**

(72) Inventors:
• **MOTODA, Sokuei**
  **Kodama-gun, Saitama 367-0241 (JP)**

• **NAKAJIMA, Ryo**
  **Kodama-gun, Saitama 367-0241 (JP)**
• **HARASHIMA, Isao**
  **Tokyo 103-8383 (JP)**
• **OOTANI, Kiyoshi**
  **Tokyo 103-8383 (JP)**
• **AKEGAMIYAMA, Norihiko**
  **Tokyo 103-8383 (JP)**

(74) Representative: **Adam, Holger et al**
**Kraus & Weisert**
**Patentanwälte PartGmbB**
**Thomas-Wimmer-Ring 15**
**80539 München (DE)**

(56) References cited:
JP-A- 2002 023 479    JP-A- 2004 191 561
JP-A- 2006 088 015    JP-A- 2007 233 367
JP-A- 2009 237 463    JP-A- 2010 113 177
US-A1- 2004 170 449   US-A1- 2007 197 362

**Description**

TECHNICAL FIELD

The present invention relates to an electrically conductive roller, a development apparatus, and an image-forming device. More specifically, the present invention relates to an electrically conductive roller capable of preventing the occurrence of toner filming for a long time and of providing toners with a desired quantity of electric charge, and a development apparatus and an image-forming device capable of forming high quality images for a long time.

BACKGROUND ART

Printers such as laser printers and video printers, copying machines, facsimile machines, and all-in-one printers with the functions of these printers and machines employ various image-forming devices utilizing electrophotography. Electrophotographic image-forming devices are equipped with various rollers. Examples of such rollers may include conductive rollers with electric conductivity or semiconductivity, and elastic rollers with a relatively low hardness. The electrically conductive rollers may include, for example, charge rollers for uniformly charging image carriers such as photoreceptors, developing rollers for carrying and conveying a toner to supply the toner to image carriers, toner-supplying rollers for supplying a toner to a developing roller while charging the toner, fixing rollers for fixing a toner that has been transferred to a recording material, such as recording paper, to the recording material, and cleaning rollers for removing toners adhering to image carriers. These various rollers are each provided with an elastic layer made of various rubbers such as silicone rubber and urethane rubber, and a surface layer formed on an outer circumferential face of the elastic layer.

For example, patent document 1 discloses "an electrically semiconductive roller comprising a core shaft, an elastic layer around the core shaft, and an electrically conductive resin layer formed on an outer circumferential face of the elastic layer, wherein the electrically conductive resin layer contains a cured product of a reactive amino resin, and the electrically semiconductive roller has a JIS A hardness, or hardness according to JIS K6253: 1993, from not less than 25° to not more than 40°".

Also, patent document 2 discloses "a developing roller that contacts or approaches close to a latent image carrier on which an electrostatic latent image is formed provides the latent image carrier with a toner carried on the developing roller, and visualizes the electrostatic latent image, the developing roller comprising an outer circumferential face covered with a surface layer having skeletons of guanamine derived from guanamine compounds that contain not less than 20% by weight of at least one selected from the group consisting of guanamine or derivatives thereof, and guanamine condensates".

Furthermore, patent document 3 discloses "a developing roller comprising a shaft, a base rubber layer formed on an outer circumferential face of the shaft, and a surface layer formed directly on an outer circumferential face of the base rubber layer, or on the outer circumferential face of the base rubber layer with at least one other layer in between, wherein the surface layer is made of a resin composition which contains components (A) to (D), and a weight (A) of the component (A), a weight (B) of the component (B), and a weight (C) of the component (C) satisfy relationships defined by formulae ($\alpha$) and ($\beta$):

(A) an amino resin
(B) a diisocyanate
(C) a resin with a glass transition temperature (Tg) of not more than 0°C
(D) an electroconductive agent

$$0.5 > (A)/[(A)+(C)] \geq 0.3 \qquad (\alpha)$$

$$0.6 > [(A)+(B)]/[(A)+(B)+(C)] \geq 0.3 \qquad (\beta)"$$

Patent document 4 discloses another example, "an electrically conductive member used in electrophotographic apparatuses comprising a polymeric material that contains electrically conductive powder and silica particles dispersed in the polymeric material".

Among these rollers, those contacting toners, such as developing rollers and toner-supplying rollers, are required to have a surface roughness that enables the rollers to carry and convey a predetermined amount of toners, and a property capable of preventing toners from sticking fast to the surface of the rollers in such a manner that the toners form a film on the surface, which is called filming in this specification. These rollers are also required to have an excellent electrostatic property in relation to toners, more specifically a property capable of providing toners with a large quantity of electric charge.

Patent document 5 teaches a developing roller comprising a highly conductive shaft (2), a semi-conductive elastic layer (3) formed on the outer periphery of the shaft (2), and a semi-conductive resin outer layer (3a) formed on the semi-conductive elastic layer (3). The resin outer layer (3a) is formed by curing an ultraviolet-curable resin or an electron-beam-curable resin, an example of which is urethane resin. Fine particles are dispersed into the resin outer layer (3a) to form roughness in the surface of the resin outer layer (3a). The amount of the fine particles is in a range of 0.1 to 100 parts by weight to 100 parts by weight of the resin. Preferably used as the fine particles are fine particles of a rubber or a synthetic resin, or carbon fine particles, examples of which are silicone rubber, fluoroplastic, urethane elastomer, urethane acrylate, melamine resin, phenol resin, and glassy carbon.

Patent document 6 also teaches a conductive elastic roller (1) comprising a shaft member (2), an elastic member (3) disposed on an outer circumference of the shaft member (2) and a coating layer (4) disposed on an outer circumference of the elastic member (3) . The raw material mixture for the coating layer (4) may be compounded with various additives such as microparticle. The amount of the microparticle is preferably within a range of 0.1-100 parts by mass. Microparticles of silicone rubber, silicone resin, fluorocarbon resin, urethane resin, polyolefin resin, epoxy resin, polystyrene resin, urethane acrylate, melamine resin, phenol resin, (meth)acrylic-based resin and glassy carbon, and silica microparticles are disclosed as specific microparticles.

Patent document 7 also discloses an electrically conductive roller and its teaching in part overlaps with that of patent document 6.

PRIOR ART DOCUMENTS

[Patent Documents]

Patent Document 1: JP 2006-163042 A
Patent Document 2: Japanese Patent No. 3805563
Patent Document 3: Japanese Patent No. 4240119
Patent Document 4: JP H08-286470 A
Patent Document 5: US 2004/170449 A1
Patent Document 6: US 2007/197362 A1
Patent Document 7: JP 2007 233367 A

DISCLOSURE OF THE INVENTION

[Problems to be Solved by the Invention]

When a roller containing particles such as silica particles, an example of which is the electrically conductive member disclosed in patent document 4, is employed as a roller, for example, a developing roller, of an image-forming device, it contributes little to improvement in the property of providing toners with electric charge. Besides, particles, such as silica particles, are generally hard, and therefore they place unduly stress on the toners to such an extent that the toners are damaged or generate heat. The damage or heat may sometimes cause filming, in a form similar to a deposit, on the surface of the roller. Furthermore, a large amount of particles contained in the roller to ensure a desired surface roughness of the roller are apt to agglomerate, which may adversely affect the charging characteristics. When the roller contains particulates whose diameter is generally large, the particulates are prone to drop off the surface of the roller as time goes by, which results in deterioration in the charging characteristics with the passage of time and the occurrence of filming.

Researches by the inventors of the present invention revealed the following: When the electrically conductive resin layer, the surface layer, and the superficial layer, which may be collectively called the surface layer, contains a cured product of an amino resin, the surface layer becomes hard naturally. Therefore when the roller is used as a developing roller, the roller places unduly stress on toners, which are apt to cause filming. Filming, which grows as time passes, lowers the charging characteristics.

An objective of the present invention is to provide an electrically conductive roller capable of preventing the occurrence of filming for a long time and of imparting a desired quantity of electric charge to toners.

A further objective of the present invention is to provide a development apparatus and an image-forming device capable of forming high quality images for a long time.

[Means to Solve the Problems]

As first means for solving the aforementioned problem, the electrically conductive roller according to the present invention has a urethane coat layer containing a urethane resin guanamine resin in a form of particulates in an amount from 10 to 70 parts by mass to 100 parts by mass of the urethane resin, the urethane coat layer formedon an outer circumferential face of an elastic layer.

A preferred example of the electrically conductive roller is as follows:

The electrically conductive roller wherein the guanamine resin contains benzoguanamine resin.

As second means for solving the aforementioned problem, the development apparatus according to the present invention is equipped with the electrically conductive roller of the present invention. As thirdmeans for solving the aforementioned problem, the image-forming apparatus according to the present invention is equipped with the electrically conductive roller of the present invention.

[Advantages of the Invention]

The electrically conductive roller of the present invention has a urethane coat layer formed on the outer circumferential face of an elastic layer, which urethane coat layer contains a urethane resin and a particulate guanamine resin, is capable of arresting fast adhesion of toners to the surface thereof when it is used as a developing roller, and of providing toners with a desired quantity of electric charge. Thus the present invention provides an electrically conductive roller capable of preventing the occurrence of filming for a long time and imparting a desired quantity of electric charge to toners.

The development apparatus and the image-forming device of the present invention are each provided with the electrically conductive roller according to the present invention. When the electrically conductive roller is used as, for example, a developing roller in the apparatus and the device, the roller is capable of arresting fast adhesion of toners to the surface thereof, and of providing toners with a desired quantity of electric charge. Thus, the present invention provides a development apparatus and an image-forming device capable of forming high quality images for a long time.

BRIEF DESCRIPTION OF THE DRAWINGS

[Figure 1] Figure 1 is a perspective view showing an example of the electrically conductive roller according to the present invention.

[Figure 2] Figure 2 is an enlarged schematic diagram showing a section taken along a plane perpendicular to the axis of an electrically conductive roller according to the present invention.

[Figure 3] Figure 3 is a schematic diagram showing an example of the image-forming device equipped with a development apparatus according to the present invention.

BEST MODE TO CARRY OUT THE INVENTION

The electrically conductive roller of the present invention has a shaft, which is an example of a member employed as necessary, an elastic layer formed on an outer circumferential face of the shaft, and a urethane coat layer formed on an outer circumferential face of the elastic layer. The urethane coat layer contains a urethane resin and a particulate guanamine resin. The guanamine resin is in a form of particulates. In other words, particulates of a guanamine resin are contained in the urethane coat layer. In this way, the particulate guanamine resin may be called particulates of the guanamine resin, or guanamine resin particulates. The guanamine resin is capable of keeping an increase in the hardness of the urethane coat layer very small, and it contributes to maintaining the low hardness of the urethane coat layer, without allowing the hardness to increase greatly. Thus, the electrically conductive roller according to the present invention, which is provided with the urethane coat layer containing the particulate guanamine resin, is capable of keeping stress placed on toners small and of preventing the occurrence of toner filming for a long time. Furthermore, the particulates of the guanamine resin are harder to come off than other particles such as silica particles. Therefore the particulate guanamine resin is capable of preventing the occurrence of toner filming caused by the coming off of the guanamine resin particulates. In addition, this prevention of the occurrence of toner filming leads to the prevention of changes in the charging characteristics due to the filming and due to the coming off of the guanamine resin particulates. As a result, the electrically conductive roller of the invention is capable of maintaining initial charging characteristics imparted by the particulate guanamine resin for a long time and of providing toners with a desired quantity of electric charge for an extended period of time.

The electrically conductive roller according to the present invention has low hardness, as described hereinbefore.

Specifically, the roller should preferably have a JIS A hardness of less than 45, particularly preferably a JIS A hardness of not more than 43. Although there is no special restriction on the lower limit of the JIS A hardness, the limit may be set to, for example 20. Alternatively, the limit may be fixed to 30 or 40 depending on the circumstances. The JIS A hardness of the roller may be measured in accordance with the provisions of JIS K6253.

In order to convey a predetermined amount of toners and to contribute to the formation of images of high density, the surface of the electrically conductive roller, or the urethane coat layer, should have a ten-point mean roughness Rz, according to JIS B 0601-1984, preferably from 2 to 15 $\mu$m, particularly preferably from 5 to 13 $\mu$m. The ten-point mean roughness Rz (in $\mu$m) is measured by the method according to JIS B 0601-1984. Specifically, an electrically conductive roller according to the present invention is placed in a surface roughness tester with a measuring probe having a tip whose radius is 2 $\mu$m, a product named "590A" that is manufactured by TOKYO SEIMITSU CO., LTD. The measurement is carried out with at least three parts on the surface of the electrically conductive roller of the invention, along the circumference of the roller or the axis thereof, under the condition that the cutoff length is 0.8 mm, the evaluation length is 2.4 mm, and the cutoff setting is made with a Gaussian filter. Regarded as the ten-point mean roughness Rz is the arithmetic mean of the values obtained through the measurement. The ten-point mean roughness Rz may be adjusted by factors such as the amount of the amino resin (guanamine resin) particulates and the mean particle diameter thereof, and the thickness of the urethane coat layer.

The roller of the present invention is electrically conductive. The roller of the present invention with electrical conductivity has a property of electrostatically carrying toners and conveying them, in addition to a property of physically carrying toners due to the suitable ten-point mean roughness Rz. Thus the electrically conductive roller according to the present invention contributes to the formation of images of high density. An index of the electrical conductivity of the roller may be, for example, the electric resistance at a temperature of 20°C and a relative humidity of 50%. The electric resistance at a temperature of 20°C and a relative humidity of 50% should preferably be from 1 x 10$^4$ to 1 x 10$^9$ $\Omega$. The electric resistance of the roller according to the present invention may be measured with an ohmmeter, such as one whose product name is ULTRA HIGH RESISTANCE METER R8340A, manufactured by ADVANTEST CORPORATION, by the following method: The electrically conductive roller is placed horizontally. As an electrode is used a gold-plated board-like member with a thickness of 5 mm, a width of 30 mm and a length sufficient to receive the entire length of the elastic layer of the electrically conductive roller on the member. With each end of the shaft of the electrically conductive roller loaded with 500 g, which means that the roller is loaded with 1000 g in total, a voltage of DC 100 V is applied between the shaft and the electrode. The value indicated by the ohmmeter one second after the application of the voltage is read, and the value is regarded as the electric resistance.

The electrically conductive roller according to the present invention is capable of providing toners with a desired quantity of electric charge. The quantity of the electric charge to be imparted to toners should be desirably from about 10 to 60 $\mu$C/g, or from about -60 to -10 $\mu$C/g, more desirably from about 15 to 50 $\mu$C/g, or from about -50 to -15 $\mu$C/g, particularly desirably from about 35 to 50 $\mu$C/g, or from about -50 to -35 $\mu$C/g. When the electrically conductive roller according to the present invention, capable of providing toners with electric charge of an amount within the range, is used as a developing roller, the roller is capable of supplying toners with a desired quantity of electric charge to an image carrier, which results in the formation of high quality images. The quantity of electric charge imparted to toners may be measured by the following method: An electrically conductive roller according to the present invention is fixed to an image-forming device manufactured by Cki Data Corporation, whose product name is MICROLINE 1032PS and whose resolution is 1200 dpi. Five copies of a solid black image are printed. When the device begins to print the sixth copy, the printing is forcibly stopped. The electrically conductive roller is taken out of the image-forming device. The electric charge of toners adhering to the surface of the roller may be measured with a compact toner draw-off charge measurement system with a vacuum port whose sectional area is 0.25 cm$^2$, such as a product named "210HS Q/M Meter" manufactured by TREK JAPAN, INC.

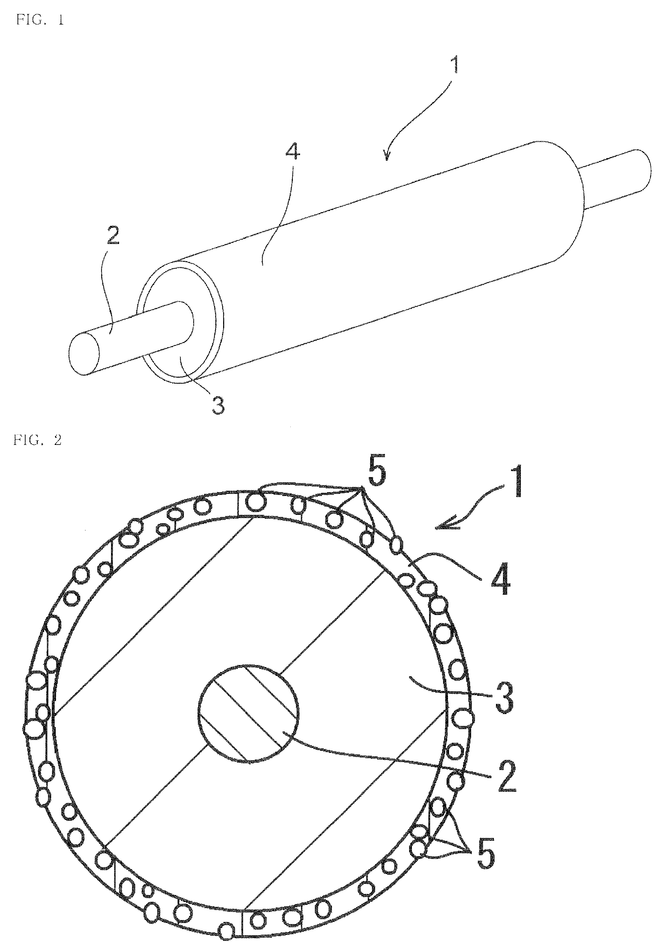

The electrically conductive roller of the present invention will be explained in detail. As shown in Figures 1 and 2, an electrically conductive roller 1, which is an example of the roller according to the present invention, is provided with a shaft 2, an elastic layer 3 formed on an outer circumferential face of the shaft 2, and a urethane coat layer 4 formed on an outer circumferential face of the elastic layer 3. The electrically conductive roller 1 shown in Figure 1 has an adhesive layer, which is also called a primer layer, formed on the outer circumferential face of the shaft 2 when it is desired. (The adhesive or primer layer is not shown in Figure 1 or 2.) The elastic layer 3 is formed on the outer circumferential face of the shaft 2, or on the adhesive or primer layer when the latter is provided. Another or second adhesive layer, which is also called a primer layer and which is not shown in Figure 1 or 2, may be formed on the outer circumferential face of the elastic layer 3, if it is considered desirable. The urethane coat layer 4 is formed on the outer circumferential face of the elastic layer 3, or on the second adhesive or primer layer when the latter is provided.

The electrically conductive roller 1 has a JIS A hardness, a ten-point mean roughness Rz, an electric resistance, and a quantity of electric charge each within the ranges specified hereinbefore.

There is no additional requirement for the shaft 2, as long as it has excellent electrical conductivity. The shaft is one which is known as "cored bar", as shown in Figure 1, made of metal such as iron, aluminum, stainless steel, or brass. The shaft may have a core of an electrical insulator, such as thermoplastic resin or thermosetting resin, the corebeingmetal plated so as to be electrically conductive. Furthermore, the shaft may be made of an electrically conductive resin composed of thermoplastic resin or thermosetting resin with an electric conductivity agent, such as carbon black or metal powder, added. The diameter and the length along its axis of the shaft 2 are adjusted so that the shaft fits in the image-forming device where the shaft will be placed. For example, the diameter of the shaft 2 should be from 4 to 10 mm.

The elastic layer 3 has elasticity. When a roller with the elastic layer 3 having elasticity is placed in a contact type image-forming device, the roller is capable of contacting the image carrier, keeping the width of the contact large and uniform for a long time. On the other hand, when the roller is placed in a non-contact type image-forming device, it enables the controlling blade to work sufficiently.

The elastic layer 3 is made by curing a rubber composition, which will be explained hereinafter, on the outer circumferential face of the shaft 2. The elastic layer 3 should have such a JIS A hardness value that the electrically conductive roller 1 has a JIS A hardness value within the range specified hereinbefore. Preferably, the elastic layer should have a JIS A hardness of 20 to 45. The elastic layer with a JIS A hardness of 20 to 45 will be able to ensure a large contact area between the electrically conductive roller 1 and the thing being contacted, such as an image carrier. Especially when the electrically conductive roller 1 is employed as a toner carrier such as a developing roller, the roller is capable of ensuring a large contact area between itself and the image carrier, and of efficiently carrying and conveying a toner by static electricity, which improves efficiency in the development. The JIS A hardness of the elastic layer 3 may be measured in the same way as that of the electrically conductive roller of the present invention.

The elastic layer 3 should desirably have a thickness of not less than 1 mm, more desirably not less than 5 mm. On the other hand, there is no special limitation on the upper limit of the thickness as long as the accuracy of the outer diameter of a cylinder consisting of the shaft and the elastic layer 3 is not marred. However, when the thickness of the elastic layer 3 is increased too large, the cost of producing the elastic layer 3 is also increased. From the viewpoint of practical cost, the thickness of the elastic layer 3 should be preferably not more than 30 mm, more preferably not more than 20 mm. For example, the thickness of the elastic layer 3 should be from 3 to 7 mm.

The elastic layer 3 has electrical conductivity. An index of the electrical conductivity may be, for example, the electric resistance at a temperature of 20°C and a relative humidity of 50%. The electric resistance at a temperature of 20°C and a relative humidity of 50% should preferably be from $1 \times 10^2$ to $1 \times 10^6$ $\Omega$. The electric resistance of the elastic member 3 may be measured, in the condition where the urethane coat layer 4 is removed from the electrically conductive roller 1, by essentially the same method as that of the electrically conductive roller 1.

The elastic layer 3 is made of a rubber composition or a flexible resin composition containing various rubbers and/or flexible resins, so that the electrically conductive roller 1 will have a low hardness within the range specified hereinbefore. Examples of the various rubbers or the flexible resins contained in these compositions may include silicone rubber, urethane rubber, and EPDM. Among them, silicone rubber is preferable from the viewpoint of environmental stability and durability. The silicone rubber includes, other than ordinary silicone rubber, those such as modified silicone rubber. The roller provided with the urethane coat layer 4 is capable of preventing silicone oligomers from bleeding onto the surface of the urethane coat layer 4 when the elastic layer 3 is a silicone elastic layer. The rubber composition or the flexible resin composition, which forms the elastic layer 3, contains the rubbers and/or flexible resins, and further contains electric conductivity agents and various additives, if desired. Therefore the elastic layer 3 also contains electric conductivity agents and various additives, which are normally contained in rubber compositions or flexible resin compositions. The rubber composition or the flexible resin composition will be explained hereinafter.

As shown in Figures 1 and 2, the urethane coat layer 4, which may be a single layer or a laminate, is formed on the outer circumferential face of the elastic layer 3. The urethane coat layer of this example is a single-layered one. The urethane coat layer 4 is formed by curing a urethane resin composition containing a particulate guanamine resin 5, which will be explained hereinafter, on the outer circumferential face of the elastic layer 3. The urethane coat layer is normally in the form of a thin layer. Specifically, the thickness of the layer should be preferably from 2 to 50 $\mu$m, more preferably from 10 to 30 $\mu$m. Especially when the elastic layer 3 is made of silicone rubber, the urethane coat layer 4 should preferably have such a thickness that the urethane coat layer is capable of preventing silicone oligomers from bleeding out onto the surface thereof. The urethane coat layer 4 should have a thickness, for example, from 2 to 50 $\mu$m, more desirably from 5 to 30 $\mu$m. The urethane coat layer 4 having a thickness within the specified range arrests the bleed-out of silicone oligomers, which leak from the silicone elastic layer 3 when the electrically conductive roller 1 is provided with a silicone elastic layer, onto the surface of the electrically conductive roller 1, and checks the staining of things that contact the electrically conductive roller 1, which contributes to the formation of high quality images.

The urethane coat layer 4 contains a urethane resin, a particulate guanamine resin 5, and various additives ordinarily employed for various urethane resin compositions, if necessary.

Known urethane resin would suffice for the urethane resin contained in the urethane coat layer 4, and such urethane resin is normally produced from a polyol and a polyisocyanate. From the viewpoint of achieving the obj ective of the present invention sufficiently, the polyol should preferably be a polyester polyol or a polyether polyol. Also, the polyisocyanate may be, for example, an aliphatic polyisocyanate or an arylpolyisocyanate. The polyol and the isocyanate will be explained hereinafter.

The particulate guanamine resin 5 is particulates of a guanamine resin. The urethane coat layer 4 containing the particulate guanamine resin 5 is capable of preventing the occurrence of toner filming for a long time and of imparting a desired quantity of electric charge to toners. The guanamine resin may be produced by a condensation reaction of formaldehyde with a compound having a functional group that has a nitrogen atom and at least one active hydrogen atom bonded with the nitrogen atom, such as an amino group and an imino group. The guanamine resin contributes to a satisfactory achievement of the objective of the present invention. The guanamine resin is a condensation product of guanamine or a derivative thereof and formaldehyde. Examples of the derivatives of guanamine may include 2,4-diamino-6-alkyl-1,3,5-triazines and 2,4-diamino-6-aryl-1,3,5-triazines, or compounds made by replacing at least one hydrogen atom of at least one of the amino groups of these substituted triazines and guanamine with a functional group such as an alkyl group or an aryl group. The alkyl group may be an alkyl group with 1 to 8 carbon atoms, such as a methyl group, an ethyl group, propyl groups including a n-propyl group and an i-propyl group, butyl groups including a n-butyl group, an i-butyl group, a s-butyl group, and a t-butyl group, pentyl groups including a n-pentyl group, i-pentyl groups, and s-pentyl groups, hexyl groups including a n-hexyl group, i-hexyl groups, and s-hexyl groups, and octyl groups. Examples of the aryl group may include a phenyl group, a tolyl group, and dimethylphenyl groups. Among the guanamine resins, guanamine resin, or a condensation product of guanamine and formaldehyde, and an aryl-substituted guanamine resin, or a condensation product of a 2,4-diamino-6-aryl-1,3,5-triazine and formaldehyde, are preferable. Particularly preferable is benzoguanamine resin, a condensation product of benzoguanamine and formaldehyde.

There is no special limitation on the shape of the particulates of the guanamine resin 5, as long as the particulate guanamine resin is in the form of separate solids, such as particulates or powder. The particulates may each be in the shape of a sphere, an ellipsoid, or a plate, with a sphere preferable. The mean particulate size of the particulates of the guanamine resin 5 should be suitably decided depending on the thickness of the urethane coat layer 4. For example, the mean particulate size should be less than twice the thickness of the urethane coat layer 4, because guanamine resin particulates, each within the size are stably contained in the urethane coat layer 4, are harder to come off the urethane coat layer 4, and set the surface roughness of the electrically conductive roller 1, or urethane coat layer 4, to a value within the range specified hereinbefore, which makes the roller excellent in physically carrying and conveying toners. Specifically, the mean particulate size of the guanamine resin particulates 5 should be preferably not less than 2 $\mu$m, particularly preferably not less than 5 $\mu$m, because this mean particulate size contributes to reduction in the amount of the guanamine resin particulates to be contained in the urethane coat layer without damaging the aforementioned advantages of the guanamine resin particulates 5. Although there is no special limitation on the upper limit of the mean particulate size, the upper limit of the mean particulate size should be less than twice the thickness of the urethane coat layer 4. The upper limit may be, for example, 50 $\mu$m. Also, when the elastic layer 3 is made of silicone rubber, the guanamine resin particulates 5 should have a suitable particle size because the guanamine resin particulates with such a size are capable of preventing silicone oligomers from bleeding out to the surface of the urethane coat layer 4. The guanamine resin particulates should have an average particle size, for example, from 2 to 30 $\mu$m, particularly preferably from 5 to 20 $\mu$m, in relation to the urethane coat layer 4 having a thickness within the range specified hereinbefore. The electrically conductive roller provided with a urethane coat layer 4 that contains the guanamine resin particulates 5 having a mean particulate size within the specified range is capable of preventing the occurrence of filming for an extended period of time and keeping excellent charging characteristics over a long period of time. In addition, the electrically conductive roller 1 provided with the specified urethane coat layer makes it harder for silicone oligomers, which leak from the silicone elastic layer 3 when the roller has a silicone elastic layer, to bleed out onto the surface of the electrically conductive roller 1, and checks the staining of things that contact the electrically conductive roller 1, which contributes to the formation of high quality images. The mean particulate size of the guanamine resin particulates 5 may be obtained by the following method: Particulates of the guanamine resin 5 are observed at 2000 magnifications with a JSM-5200 scanning electron microscope, a product manufacture by the DATUM Solution Business Operations of JEOL, Ltd., and the largest outer diameter of each particulate is measured. The arithmetic mean of the measured diameters is regarded as the mean particulate size.

The guanamine resin particulates 5 may be produced by pulverizing a guanamine resin, or by a suspension polymerization method. Alternatively, a commercially available product may be purchased.

The amount of the guanamine resin particulates 5 contained in the urethane coat layer 4 are from 10 to 70 parts by mass, particularly preferably from 20 to 60 parts by mass, to 100 parts by mass of a urethane resin that makes the urethane coat layer 4. The particulate guanamine resin 5 contained in an amount within the specified range is capable of improving the charging characteristics of the urethane coat layer 4 without raising the hardness of the superficial layer thereof. The particulate guanamine resin 5 with a mean particulate size within the range specified hereinbefore in an amount within the specified range is capable of preventing the occurrence of filming for an extended period of time and keeping excellent charging characteristics over a long period of time. In addition, the particulate guanamine resin is capable of effectively improving the physical conveyance of toners and of advantageously arresting the bleed-out of

EP 2 682 821 B1

silicone oligomers.

The particulates of the guanamine resin 5 are present in the urethane coat layer 4 independently or in the form of a composite with the urethane resin. Even when the guanamine resin particulates form a composite with the urethane resin, they maintain their particulate form. The presence of the guanamine resin particulates 5 is capable of being checked by observing a section of the urethane coat layer 4.

The additives may be those that are normally added to various urethane resin compositions if necessary. Specific examples of the additives may include chain extenders, electric conductivity agents, catalysts, dispersants, surfactants, flame retardants, colorants, fillers, plasticizers, and mold release agents.

The electrically conductive roller 1 provided with the urethane coat layer 4, which contains the particulate guanamine resin 5, or the guanamine resin in the form of particulates that are hard to come off the urethane coat layer 4, is capable of keeping the hardness of the urethane coat layer 4 low. Thus the electrically conductive roller, when it is used as, for example, a developing roller for a long time, is capable of preventing the occurrence of filming for an extended period of time and providing toners with a desired quantity of electric charge.

The electrically conductive roller 1 with the specified properties is suitably used for electrically conductive rollers placed in image-forming devices, such as charge rollers, developing rollers, toner-supplying rollers, transfer rollers, and cleaning rollers. The electrically conductive roller is particularly suitably employed for developing rollers.

The electrically conductive roller according to the present invention, for example the electrically conductive roller 1, is produced by forming an elastic layer 3 on the outer circumferential face of a shaft 2, and then forming a urethane coat layer 4 on the outer circumferential face of the elastic layer 3. As a first step of producing the electrically conductive roller 1, a shaft 2 is prepared. The shaft 2 is formed into a desired shape by, for example, known methods. A primer may be applied to the shaft 2 before the formation of the elastic layer 3. There is no special limitation on the primer to be applied to the shaft 2. The primer may be dissolved in a medium such as a solvent if desired, and may be applied to the outer circumferential face of the shaft by the usual method, such as dipping or spraying.

Then, the elastic layer 3 is formed, by heating the rubber composition that has been applied onto the outer circumferential face of the shaft 2 so that the composition on the face is cured. The formation of the elastic layer 3 may be done by any suitable method, such as continuous vulcanization through extrusion molding, press, or die forming through injection. The temperature and time period for the heating employed to cure this rubber composition should suitably be selected depending on the rubber composition. The surface of the elastic layer 3 thus formed may be ground and polished, if it is desired, so that the outer diameter of a cylinder consisting of the shaft and the elastic layer 3 and the conditions of the surface the elastic layer will be adjusted. The primer may be applied to the outer circumferential face of the elastic layer 3, if desired.

The rubber composition or the flexible resin composition, of which the elastic layer 3 is made, is just required to contain a rubber and/or a flexible resin. The composition may further contain an electric conductivity agent and various additives, if necessary. The rubber should preferably be silicone rubber among the usable rubbers specified hereinbefore. The electric conductivity agent may be liquid or solid. Examples of the electric conductivity agent may include electrically conductive powder and ionically conductive substances. Specific examples of the electrically conductive powder may include carbons for rubber, such as SAF, ISAF, HAF, FEF, GPF, SRF, FT, and MT; metal oxides, such as titanium oxide and zinc oxide; metals, such as nickel, copper, silver, and germanium; and electrically conductive polymer such as polyaniline, polypyrrole, and polyacetylene, in addition to electrically conductive carbon, such as Ketjen black and acetylene black. The ionically conductive substances may be inorganic ionically conductive substances, specific examples of which may include sodium perchlorate, lithium perchlorate, calcium perchlorate, and lithium chloride. The electric conductivity agents may be used singly or a combination of two or more of the agents may be used. The electric conductivity agents should be used in such an amount that the electrically conductive roller 1 with the agents added has a desired electric resistance. The amount may be, for example, from 20 to 80 parts by mass to 100 parts by mass of the rubber or flexible resin. The various additives may be those generally contained in rubber compositions or flexible resin compositions. Examples of the additives may include auxiliaries such as chain extenders and crosslinking agents, catalysts, dispersants, foaming agents, age resistors, antioxidants, fillers, pigments, colorants, processing agents, softeners, plasticizers, emulsifiers, heat-resistance improvers, flame-retardant enhancers, acid acceptors, thermal conductivity improvers, mold release agents, and solvents. These various additives may be ordinarily employed ones, or specially employed ones depending on the use.

The silicone rubber composition containing silicone rubber may contain an electric conductivity agent if necessary, and additives if desired, in addition to the silicone rubber. Although a brief explanation of the silicone rubber has been made hereinbefore, it will be explained in more detail in the following . The silicone rubber may be a milable type or a liquid type. The type may suitably be selected according to the method of forming the elastic layer 3 and the properties demanded of the elastic layer 3.

Preferable examples of the silicone rubber composition may be addition-cure milable electrically conductive silicone rubber compositions and addition-cure liquid electrically conductive silicone rubber compositions.

The addition-cure milable electrically conductive silicone rubber composition contains (A) anorganopolysiloxane represented by average composition formula (1) shown below, (B) a filler, and (C) an electrically conductive material other than those belonging to component (B). Average composition formula (1) is:

$$R_nSiO_{(4-n)/2} \qquad (1)$$

In this formula, R's, which may be the same or different from each other, each denote a substituted or unsubstituted hydrocarbyl group, preferably a substituted or unsubstituted hydrocarbyl group with 1-12 carbon atoms, more preferably a substituted or unsubstituted hydrocarbyl group with 1-8 carbon atoms; and n is a positive number from 1.95 to 2.05. Components (A) - (C) are essentially the same as the corresponding components of the "addition-cure milable electrically conductive silicone rubber compositions" disclosed in JP 2008-058622 A.

The addition-cure liquid electrically conductive silicone rubber composition contains (D) an organopolysiloxane with at least two alkenyl groups bonded to silicon atoms in one molecule; (E) an organohydrogenpolysiloxane with at least two hydrogen atoms bonded to silicon atoms in one molecule; (F) an inorganic filler with a mean particle size of 1 to 30 $\mu$m and a bulk density of 0.1 to 0.5 g/cm$^3$; (G) an electric conductivity agent; and (H) a catalyst for the addition reaction. Components (D) - (G) are essentially the same as the corresponding components of the "addition-cure liquid electrically conductive silicone rubber compositions" disclosed in JP 2008-058622 A.

The rubber composition or flexible resin composition is produced by kneading the rubbers and/or flexible resins, and optionally the electric conductivity agent and the various additives for several minutes to several hours, preferably for five minutes to one hour, at ordinary temperature or at a raised temperature with a rubber kneader such as a twin roll mill, a triple roll mill, some other roll mill, a Banbury mixer, and a dough mixer, so that the composition and optional components are uniformly mixed.

The surface of the elastic layer 3, formed on the outer circumferential face of the shaft 2, may be ground and polished, if it is desired, so that the outer diameter of a cylinder consisting of the shaft and the elastic layer 3 and the conditions of the surface of the elastic layer will be adjusted. Before the formation of the urethane coat layer 4, the primer layer may be formed on the elastic layer 3.

The urethane coat layer 4 is formed by applying a urethane resin composition, which will be explained hereinafter, onto the outer circumferential face of the elastic layer 3 or the primer layer, which is formed on the outer circumferential face of the elastic layer in some cases where it is desirable, and then heating and curing the applied urethane resin composition. The application of the urethane resin composition may be carried out by known methods, examples of which may include coating in which the face is coated with a coating liquid of the urethane resin composition, dipping in which the roller under production with the elastic layer 3 is immersed in the coating liquid, and spray coating in which the coating liquid is sprayed onto the elastic layer 3. The urethane resin composition may be applied as it is. Instead of an undiluted urethane resin composition may be employed a coating liquid including the urethane resin composition, and water or volatile solvents whose examples may include alcohols such as methanol and ethanol, aromatic solvents such as xylene and toluene, and ester solvents such as ethyl acetate and butyl acetate. The curing of the urethane resin composition that has been thus applied may be carried out by any method capable of providing the composition with heat necessary to cure it. Examples of the method may include heating the roller under production with the elastic layer 3 which has been coated with the urethane resin composition, with a heater. The temperature employed for heating and curing the urethane resin composition is, for example, from 60 to 200°C, particularly from 120 to 160°C, and the time period therefor is preferably from 10 to 120 minutes, particularly from 30 to 60 minutes. In place of the coating, the urethane resin composition may be laminated on the outer circumferential face of the elastic layer 3 or primer layer, by known molding methods, such as extrusion molding, pressing, and injection molding. Simultaneously as the molding or subsequent thereto, the laminated urethane resin composition is cured.

The urethane resin composition for forming the urethane coat layer 4 contains a urethane-producing precursor, which is the component or components to produce the urethane resin, the particulate guanamine resin 5, and various additives if desired. The particulate guanamine resin 5 and the various additives contained in the urethane resin composition have been explained hereinbefore.

Compounds or polymers capable of providing polyurethane would suffice for the urethane-producing precursor, and examples of the precursor may even include a polyurethane obtained by a reaction of a polyol with a polyisocyanate. Therefore, the urethane-producing precursor may be at least one selected from the group consisting of, for example, the polyurethane, a mixture of a polyol and a polyisocyanate or blocked polyisocyanate, and a prepolymer obtained by a reaction of a polyol with a polyisocyanate or blocked polyisocyanate.

The polyol includes various polyols that are usually used for the production of polyurethane, such as monomeric polyols, polyether polyols, and polyester polyols. The polyol should preferably be at least one selected from polyether polyols and polyester polyols, because they provide the urethane coat layer 4 with excellent abrasion resistance, electric stability, and water resistance. Examples of the monomeric polyols may include ethylene glycol, propylene glycol, butylene glycol, benzyl glycol, hexylene glycol, octylene glycol, 1,3-butanediol, 1,4-butanediol, 1,6-hexanediol, 1,2,4-butanetriol, 1,2,3-propanetriol, and 1,2,6-hexanetriol. Examples of the polyether polyols may include polyalkylene glycols such as polyethylene glycol, polypropylene glycol and polypropylene glycol-ethylene glycol; polytetramethylene ether glycol; copolymer polyols of tetrahydrofuran and an alkyleneoxide; and various modified compounds and mixtures thereof. Examples of the polyester polyols may include condensed polyester polyols provided by condensation of a dicarboxylic acid, such as adipic acid, and a polyol, such as ethylene glycol and hexanediol; lactone polyester polyols; polycarbonate polyols; and mixtures thereof. The polyether polyols and polyester polyols may be used singly or in combination. Also, combinations of a polyether polyol and a polyester polyol may be employed. The polyol should preferably be a polyester polyol because it is excellent in thermal stability. The polyol should have a number average molecular weight preferably from 1000 to 8000, more preferably from 1000 to 5000. The number average molecular weight is a molecular weight by gel permeation chromatography (GPC), converted to polystyrene standard.

Various polyisocyanates that are usually used for the production of polyurethane would suffice for the polyisocyanate. It may include, for example, aliphatic polyisocyanates, aryl polyisocyanates, and derivatives thereof. The polyisocyanate should preferably be an aliphatic polyisocyanate, because the aliphatic polyisocyanate is excellent in storage stability and the rate of the reaction between the polyisocyanate and the polyol is capable of being controlled easily. Examples of the aryl polyisocyanate may include xylylene diisocyanate (XDI), diphenylmethane diisocyanate (MDI), toluene diisocyanate, which is also called tolylene diisocyanate (TDI), 3,3'-bitolylene-4,4'-diisocyanate, 3,3'-dimethyl-diphenylmethane-4,4'-diisocyanate, 2,4-tolylene diisocyanate uretidinedione (a dimer of 2,4-TDI), xylene diisocyanate, naphthalene diisocyanate (NDI), p-phenylene diisocyanate (PDI), tolidine diisocyanate (TODI), and *m*-phenylene diisocyanate. Examples of the aliphatic polyisocyanate may include hexamethylene diisocyanate (HDI), 4,4'-dicyclohexylmethane diisocyanate (hydrogenated MDI), o-toluidine diisocyanate, lysine diisocyanate methyl ester, isophoronediisocyanate (IPDI), norbornanediisocyanatemethyl, *trans*-cyclohexane-1,4-diisocyanate, and triphenylmethane-4,4',4"-triisocyanate. The derivatives may include multimers of the polyisocyanate, polyisocyanates reacted with, e.g., a small amount of a polyol that include urethane prepolymers, dimers resulting from the formation of uretidione, isocyanurates, carbodimides, uretonimine, allophanate, urea, and biuret. The polyisocyanates may be used singly or in combination. The polyisocyanate should have a molecular weight of preferably from 500 to 2000, more preferably from 700 to 1500.

In addition to these polyisocyanates, blocked polyisocyanates, the isocyanate groups of which are blocked with a blocking agent, are used suitably. The blocked polyisocyanate is stable at room temperature but dissociates the blocking agent under the influence of heat to regenerate isocyanate functionality. Therefore the blocked polyisocyanate is advantageously easy to handle. In particular, the reaction of the blocked polyisocyanate is stable even in humid summer conditions. Furthermore, it is capable of being used with reagents having high reactive groups such as amino groups. Examples of the blocking agent may include ε-caprolactams, methyl ethyl ketoximes, 3,5-dimethylpyrazoles, alcohols, and phenols. The blocking agent also includes isocyanates. When an isocyanate is used as blocking agent, the blocked polyisocyanate is a polyisocyanate dimer (uretdione). Although any one of the specified may be used for the blocking agent, ε-caprolactams and methyl ethyl ketoximes are preferable because they have excellent compatibility with the solvent.

There is no special limitation on the mixing proportion in a mixture of the polyol and the polyisocyanate. Normally, the molar ratio (NCO/OH) of isocyanate groups (NCO) included in the polyisocyanate to hydroxyl groups (OH) included in the polyol should be from 0.7 to 2.00. This molar ratio (NCO/OH) should preferably be from 0.85 to 1.60, because the molar ratio within this range leads to the prevention of hydrolysis of polyurethane.

A mixture of the polyol and the polyisocyanate may further include auxiliaries that are usually used in the reaction between a polyol and a polyisocyanate, such as chain extenders and crosslinking agents. Examples of the chain extenders and crosslinking agents may include glycols, hexanetriol, trimethylolpropane and amines.

There are special limitations neither on the prepolymer and polyurethane nor on the molecular weights thereof, as long as they are a prepolymer and a polyurethane obtainable by the reaction of the polyol with the polyisocyanate. The prepolymer and the polyurethane may be produced by allowing a polyol to react with a polyisocyanate, in the presence of the auxiliaries if necessary, by a known method such as a one-shot process or a prepolymer method.

The urethane-producing precursor should be preferably a mixture of a polyol and a polyisocyanate, particularly preferably a mixture of at least one polyol selected from the group consisting of a polyether polyol and a polyester polyol, and a polyisocyanate. In other words, it will be particularly preferable when the urethane resin composition contains a mixture of a polyisocyanate and at least one polyol selected from the group consisting of a polyether polyol and a polyester polyol.

The components for the urethane resin composition are kneaded with a kneader such as a mixer or a planetary mixer, for several minutes to several hours, preferably for five minutes to one hour, at ordinary temperature or at a raised temperature, so that the components are uniformly mixed. The urethane resin composition is thus produced.

The guanamine resin particulates 5 are dispersed, keeping their particulate form, in the urethane coat layer 4 made of the urethane resin composition.

The surface of the urethane coat layer 4 thus formed may be subjected to finishing treatments such as grinding, or a surface-roughening treatment, for example, blasting, if it is desired, so that the conditions of the surface of the urethane coat layer will be adjusted.

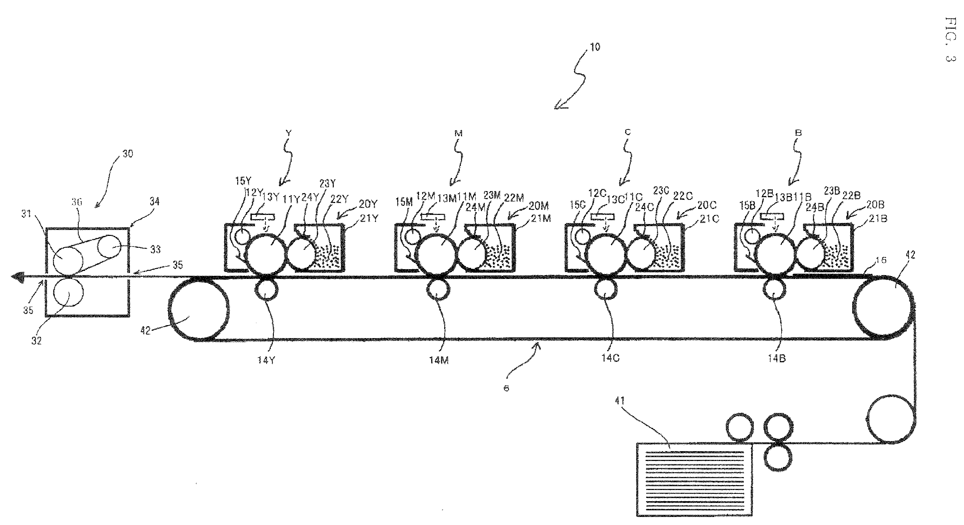

The development apparatus according to the present invention is provided with an electrically conductive roller of the present invention, and the development apparatus, in turn, is fixed in an image-forming device, for example the device shown in Figure 3. An example of the development apparatus of the present invention as well as an example of the image-forming device of the present invention, which may be hereinafter called the image-foaming device of the present invention, will be explained in the following.

As shown in Figure 3, this image-forming device 10 is a tandem color image-forming device which has developing units B, C, M and Y, each for a color, respectively provided with image carriers 11B, 11C, 11M and 11Y, wherein the image carriers are arranged in series on a transfer and conveyor belt 6. In other words, the developing units B, C, M and Y are arranged in series on the belt 6. The developing unit B has an image carrier 11B, such as a photoreceptor, which is also called photoconductor drum; a static charger 12B, such as a charge roller; an exposing device 13B; a development apparatus 20B; a transfer device 14B, such as a transfer roller; and a cleaner 15B.

The development apparatus 20B is an example of the development apparatus according to the present invention. The apparatus has, as shown in Figure 3, a developing roller of the present invention, and a toner 22B. The image-forming device 10 accordingly has the developing rollers 1 fixed therein as toner carriers 23B, 23C, 23M, and 23Y. In more detail, the development apparatus 20B is equipped with a housing 21B for containing a nonmagnetic monocomponent toner 22B; a developing roller, or a toner carrier 23B for supplying the toner 22B to the image carrier 11B; and a toner-amount adjuster 24B for adjusting a thickness of the toner 22B on the surface of the toner carrier, such as a blade. As shown in Figure 3, the toner-amount adjuster 24B contacts or presses on the outer circumferential face of the toner carrier 23B. Hence the development apparatus 20B is a so-called contact-type development apparatus. The developing units C, M and Y are essentially the same as the developing unit B.

The toner carrier 23B of the development apparatus 20B is arranged in the image-forming device 10 so that the surface of the toner carrier contacts or presses on the surface of the image carrier 11B. The toner carriers 23C, 23M, and 23Y of the respective development apparatuses 20C, 20M, and 20Y are arranged in the same way, or so that the surface of the toner carriers contacts or presses on the surface of the corresponding image carriers 11C, 11M, and 11Y. Hence the image-forming device 10 is a so-called contact-type image-forming device.

A fixing device 30 is arranged downstream of the developing unit Y. The fixing device has a housing with an opening 35 through which a recording material 16 passes. The fixing device also accommodates, in the housing, a fixing roller 31; an endless belt-supporting roller 33 placed in the proximity of the fixing roller 31; an endless belt 36 wound on the fixing roller 31 and the endless belt-supporting roller 33; and a pressure roller 32 so disposed as to face the fixing roller 31, wherein the fixing roller 31 and the pressure roller 32 are arranged so that they contact or press each other with the endless belt 36 in between and they are free to rotate. A cassette 41 for containing the recording material 16 is placed on the bottom of the image-forming device 10. The transfer and conveyor belt 6 is wound on several supporting rollers 42.

Each of the toners 22B, 22C, 22M and 22Y used in the image-forming device 10 may be a dry toner or a wet-suspended toner, or a nonmagnetic toner or a magnetic toner, as long as it is capable of being charged by friction. The housings 21B, 21C, 21M and 21Y of the developing units contain nonmagnetic monocomponent black toner, nonmagnetic monocomponent cyan toner, nonmagnetic monocomponent magenta toner and nonmagnetic monocomponent yellow toner, respectively.

The image-forming device 10 forms a color image on the recording material 16 in the following way: Firstly, in the developing unit B, an electrostatic latent image is formed on the surface of the image carrier 11B that has been charged with the static charger 12B with the aid of the exposing device 13B. Subsequently, the latent image is developed with the toner 22B supplied by the toner carrier 23B, and a corresponding black precursory image is formed. Then, the black precursory image is transferred to the surface of the recording material 16B so that a black image is formed on the material, while the recording material 16B is passing between the transfer device 14B and the image carrier 11B. A cyan image, a magenta image and a yellow image are superimposed on the black image, which has been developed from the latent image and transferred on the recording material, in the developing units C, M and Y in the same way as in the developing unit B. A color image thus appears on the recording material. Finally, the color image is fixed on the recording material 16 as a permanent image by the fixing device 30. A permanent color image is formed on the recording material 16 in this way.

The employment of the electrically conductive rollers 1, each of which has the urethane coat layer 4 containing the urethane resin and the particulate guanamine resin, which is formed on the outer circumferential face of the elastic layer 3, for the toner carriers 23 in this tandem image-forming device 10 effectively arrests fast adhesion of toners in the form of a film to the surface of the urethane coat layers 4 and the occurrence of filming, even if the rollers are used as toner carriers for an extended period of time. Furthermore, the electrically conductive rollers are capable of carrying and conveying toners, while providing the toners with a desired quantity of electric charge, and of supplying the electrically charged toners to the image carriers 11. Also, the development apparatus and the image-forming device 10, equipped with the electrically conductive rollers 1 as toner carriers 23, effectively arrest fast adhesion of toners in the form of a film to the surface of the urethane coat layer 4 of the electrically conductive rollers 1. They are further capable of carrying and conveying toners, while providing the toners with a desired quantity of electric charge, and of supplying the electrically charged toners to the image carriers 11. Thus the present invention provides an electrically conductive roller capable of preventing the occurrence of filming for a long time and of imparting a desired quantity of electric charge to toners. The invention also provides a development apparatus and an image-forming device capable of forming high quality images for an extended period of time.

The image-forming device 10 may be employed in, for example, photocopiers, facsimiles and printers. The image-forming device 10 has been explained hereinbefore with reference to an example where the electrically conductive rollers 1 are used as developing rollers, which are an example of the toner carrier 23. The employment of the electrically conductive rollers 1 according to the present invention as toner-supplying rollers will also provide images of high quality as well.

The electrically conductive roller, development apparatus, and image-forming device of the present invention are not limited to the foregoing example, but are able to be variously modified within the gist and spirit of the present invention, or as long as the objective of the present invention is capable of being achieved.

Although the electrically conductive roller 1 is in the shape of a so-called straight cylinder that has the generally same outer diameters from one end to the other end along the axis thereof, there is no special limitation on the shape of the developing roller as long as it is in the shape of a cylinder. For example, the electrically conductive roller may be in the shape of a so-called reverse camber wherein the cylinder has a larger outer diameter at around the ends thereof than at around the central portion thereof. Alternatively, the electrically conductive roller may be in the shape of a so-called camber wherein the cylinder has a smaller outer diameter at around the ends thereof than at around the central portion thereof.

The electrically conductive roller of the present invention may have other layers between the elastic layer and the urethane coat layer. An example of the other layers may be a primer layer for sticking the elastic layer and the urethane coat layer together or closely contacting them with each other. Materials for the primer layer may include alkyd resin, phenol-modified or silicone-modified alkyd resin, oil-free alkyd resin, acrylic resin, silicone resin, epoxy resin, fluororesin, phenol resin, polyamide resin, urethane resin, and mixtures thereof. The crosslinking agent to cure and/or crosslink these resins may include, for example, isocyanate compounds, melamine compounds, epoxy compounds, peroxides, phenol compounds and hydrogensiloxanes. The primer layer may be formed so as to have a thickness, for example, from 0.1 to 10 $\mu$m.

The image-forming device 10 is an electrophotographic one in the foregoing explanation. The image-forming device of the present invention, however, is not limited to electrophotographic ones, but may be applied to electrostatic image-forming devices. Also, the image-forming device equipped with the electrically conductive rollers of the present invention is not limited to the tandem color image-forming device in which several image carriers, each equipped with a developing unit of a color, are arranged on the transfer and conveyor belt in series, but maybe applied to other devices such as monochrome image-forming devices equipped with a single developing unit, and 4-cycle color image-forming devices in which a primary transfer of a precursory image with a color toner carried on an image carrier to an endless belt is repeated. Furthermore, in the foregoing explanation of the image-forming device 10, the toner 22 was a nonmagnetic monocomponent toner. However, magnetic monocomponent toners, nonmagnetic dicomponent toners and magnetic dicomponent toners may be used as well in the device of the present invention.

Although the image-forming device 10 is a so-called contact-type image-forming device where the image carrier 11 and the toner carrier 23 of the development apparatus 20 are arranged so that the latter contacts or presses on the former, the device of the present invention may be a so-called non-contact type one where the toner carrier and the image carrier are arranged with a gap in between so that the surface of the toner carrier does not contact that of the image carrier.

Although the development apparatus of the image-forming device 10 is a so-called contact-type development apparatus where the toner-amount adjuster 24 and the toner carrier 23 are arranged so that the former contacts or presses on the latter, the apparatus of the present invention may be a so-called non-contact type one where the toner-amount adjuster and the toner carrier are arranged with a gap in between so that the outer circumferential face of the toner carrier does not contact the toner-amount adjuster.

EXAMPLES

(Working Example 1)

A shaft 2 (made of SUM22, 7.5 mm in diameter and 281.5 mm in length) treated by electroless nickel plating was washed with toluene. The surface of the washed shaft was coated with a silicone primer (product name: Primer No. 16, produced by Shin-Etsu Chemical Co., Ltd.). The shaft 2, which had been coated with the primer, was fired at a temperature of 150°C for 10 minutes in a Geer oven. Subsequently, the fired was cooled at room temperature for not less than 30 minutes. A primer layer was thus formed on the surface of the shaft 2.

Then, 100 parts by mass of dimethylpolysiloxane both ends of which are blocked with dimethylvinylsiloxy groups (D) (degree of polymerization: 300), 1 part by mass of hydrophobic-treated fumed silica with a BET specific surface area of 110m$^2$/g (product name: R-972, produced by Nippon Aerosil Co., Ltd.), 40 parts by mass of diatomaceous earth with a mean particle size of 6 $\mu$m and a bulk density of 0.25 g/cm$^3$ (F) (product name: Oplite W-3005S, produced by Hokushu-Keisodo Co., Ltd.), and 5 parts by mass of acetylene black (G) (product name : DENKA BLACK HS-100, produced by DENKI KAGAKU KOGYO KABUSHIKI KAISHA) were placed in a planetary mixer. The contents in the mixer were stirred for 30 minutes, and were allowed to pass through a triple roll mill. The resultant was returned to the planetary mixer. Also introduced into the planetary mixer were 2.1 parts by mass of methylhydrogenpolysiloxane with Si-H groups at both ends and side chains (E) as a crosslinking agent (degree of polymerization: 17, Si-H content: 0.0060 mol/g), 0.1 part by mass of ethynylcyclohexanol as a reaction-controlling agent, and 0.1 part by mass of a platinum catalyst (H) (Pt content: 1%). The resulting contents were stirred and kneaded for 15 minutes. An addition-cure liquid electrically conductive silicone rubber composition was thus prepared. The prepared addition-cure liquid electrically conductive silicone rubber composition was formed into a precursory layer on the outer circumferential face of the shaft 2 by liquid injectionmolding. The cured precursory layer was polished. Thus an elastic layer 3 with an outer diameter of 20 mm was formed. The resulting elastic layer 3 had a JIS A hardness of 40, and an electric resistance of 1.0 x 10$^5$ $\Omega$, both measured in accordance with the respective methods explained hereinbefore.

On the other hand, a urethane resin composition with the following composition for the urethane coat layer 4 was prepared.

- polyisocyanate (product name: CORONATE-LJ, manufactured by NIPPON POLYURETHANE INDUSTRY Co., Ltd.): 10 parts by mass
- polyol (polyester polyol, product name: NIPPOLLAN 139, manufacture by NIPPON POLYURETHANE INDUSTRY Co., Ltd.) : 30parts by mass
  (The molar ratio of the polyisocyanate to the polyester polyol is: [NCO/OH] = 1.05.)
- electric conductivity agent (product name: EC600JD, manufactured by Lion Corporation, mean particle size: 34 nm) : 5 parts by mass
- particulates of benzoguanamine resin (product name: L15, manufactured by NIPPON SHOKUBAI CO., LTD., the particulates in the form of a general sphere, with a mean particulate size of 12 $\mu$m measured by the method explained hereinbefore): 10 parts by mass (The amount is converted to 25 parts by mass, when the total of the mass of the polyisocyanate and that of the polyol is regarded as 100 parts by mass.)

The urethane resin composition thus prepared was applied to the outer circumferential face of the elastic layer 3 at one time by spray-coating and then heated at 160°C for 30 minutes. A urethane coat layer 4 with a thickness of 12 $\mu$m was formed. The electrically conductive roller of Working Example 1 was produced in this way.

(Working Examples 2-4)

The electrically conductive rollers of Working Examples 2-4 were produced by essentially the same method as in Working Example 1, except that the amount of the benzoguanamine resin particulates was changed to 4 parts by mass (10 parts by mass to 100 parts by mass of the total of the mass of the polyisocyanate and that of the polyol), to 20 parts by mass (50 parts by mass to 100 parts by mass of the total), and to 28 parts by mass (70 parts by mass to 100 parts by mass of the total), respectively.

(Comparative Examples 4 and 5)

The electrically conductive rollers of Comparative Examples 4 and 5 were produced by essentially the same method as in Working Example 1, except that the benzoguanamine resin particulates were replaced with urea resin particulates and melamine resin particulates respectively, produced by the methods that will be explained in the following: The urea resin (product name: Fleamin M (phonetically translated), manufactured by Daiwa Co. , Ltd.) and the melamine resin (product name: Pleamin Z (phonetically translated), manufacture by Daiwa Co., Ltd.) were each ground with a mill(product name: Fluid Bed Opposed Jet Mill AFG, manufactured by Hosokawa Micron, Ltd.). The resulting particulates were classified with a classifier (product name: Elbow-Jet, manufactured by Nittetsu Mining Co. , Ltd.), so that particulates with a mean particulate size of 12 $\mu$m were collected.
The ground urea resin with a mean particulate size of 12 $\mu$m and the ground melamine resin with the same mean particulate size were used in place of the benzoguanamine resin particulates.

(Working Examples 7-9)

The electrically conductive rollers of Working Examples 7-9 were produced by the essentially same method as in Working Example 1, except that the thickness of the urethane coat layer 4 was changed to 7 µm, to 17 µm, and to 22 µm, respectively.

(Comparative Example 1)

The electrically conductive roller of Comparative Example 1 was produced by essentially the same method as in Working Example 1, except that the benzoguanamine resin particulates were replaced with silicon dioxide particles, inorganic filler (product name: Highpresica TS, manufactured by UBE-NITTO KASEI CO., LTD., mean particle size: 12 µm).

(Comparative Example 2)

The electrically conductive roller of Comparative Example 2 was produced by essentially the same method as in Working Example 1, except that the benzoguanamine resin particulates were replaced with PMMA resin particulates (product name: FH-S015, manufactured by TOYOBO CO., LTD., mean particulate size: 12 µm).

(Comparative Example 3)

The electrically conductive roller of Comparative Example 3 was produced by essentially the same method as in Working Example 1 except for the following changes: Ten parts by mass of a benzoguanamine resin (product name: BL-60, manufactured by Sanwa Chemical Co. , Ltd.), as a resin component to form the urethane coat layer 4, was added to the polyisocyanate and the polyol. Also, the benzoguanamine resin particulates were replaced with 10 parts by mass of silicon dioxide particles (product name: Highpresica TS, manufactured by UBE-NITTO KASEI CO., LTD., mean particle size: 12 µm). Thus the electrically conductive roller of this comparative example was provided with a coat layer made of the urethane resin and the amino resin containing the silicon dioxide particles.
The JIS A hardness, the ten-point mean roughness Rz, and the electric resistance of each of the produced electrically conductive rollers were measured by the respective methods that have been explained hereinbefore. The results are shown in Table 1.

(Check on Whether Particulates are Present in the Layer)

Each electrically conductive roller was cut along a plane perpendicular to the axis of the roller. The section of the urethane coat layer was observed with an electron microscope, and photographs of the section were taken. Then, it was checked whether particulates were present in the urethane coat layer. The presence of benzoguanamine resin particulates was observed in the urethane coat layers 4 in all the working examples. In Comparative Examples 1-3, silicon dioxide or PMMA resin was observed in the urethane coat layers.

(Evaluation of Occurrence of Filming)

Each of the electrically conductive rollers, produced in the working and comparative examples, was fixed in a contact-type image-forming device (product name: MICROLINE 1032PS, manufactured by Oki Data Corporation). Five hundred copies of a halftone image with a print density of 2% were printed on A4 size (in accordance with JIS) paper sheets at 23°C and 55% relative humidity. Subsequently, the electrically conductive roller was taken out of the image-forming device. The surface of the roller was visually observed and whether filming occurred was checked. When toners did not adhere fast to the surface of the roller and filming did not occur, it was graded as Excellent, which is shown as "◎" in Table 1 below. When a small amount of toners adhered to the surface of the roller, yet it did not affect the image-forming, it was graded as Good, which is shown as "○" in the table. When some amount of toners adhered to the surface but the influence of the adhesion on the image-forming was within the tolerance, it was graded as Fair, which is shown as "○ ×" in the table. When toners adhered fast to the surface and caused intolerable filming, which resulted in unsatisfactory image-forming, it was graded as Failure, which is shown as "×" in the table. The results of the evaluation are shown in Table 1.
Concerning the results of the evaluation of the occurrence of filming subsequent to the printing of the 500 copies, we think that the silicon dioxide particles came off the urethane coat layer of Comparative Example 1 and the PMMA particulates came off that of Comparative Example 2, which caused the filming. In Comparative Example 3, it is supposed that the filming was caused by the following factors: The toners were seriously stressed because of the high hardness of the coat layer, and the silicon dioxide particles came off the surface of the layer.

(Evaluation of Charging Characteristics)

Each of the electrically conductive rollers, produced in the working and comparative examples, was fixed in a contact-type image-forming device (product name: MICROLINE 1032PS whose resolution was 1200 dpi, manufactured by Oki Data Corporation). Five copies of a solid black image were printed at 20°C and 50% relative humidity. When the device began to print the sixth copy, the printing was forcibly stopped. The electrically conductive roller was taken out of the image-forming device. The electric charge of the toner adhering to the surface of the roller was measured with a compact toner draw-off charge measurement system with a vacuum port whose sectional area was 0.25 cm$^2$ (product name: 210HS Q/M Meter, manufactured by TREK JAPAN, INC.). When the quantity of electric charge, or charge quantity, of the toner was not more than -42 ($\mu$C/g), it was graded as Excellent, which is shown as "◎" in Table 1 below. When the charge quantity was from -41 to -35 ($\mu$C/g), it was graded as Good, which is shown as "○" in the table. When the charge quantity was from -34 to -30 ($\mu$C/g), it was graded as Fair, which is shown as "○×" in the table. When the charge quantity was not less than -29 ($\mu$C/g), it was graded as Failure, which is shown as "×" in the table. The results of the evaluation are shown in Table 1.
With respect to the results of the evaluation of charging characteristics, the charging characteristics of the rollers of Comparative Examples 1 and 2 were not good because silicon dioxide particles and PMMA particulates scarcely improve charging characteristics. Besides, these particles or particulates came off the surface of the rollers, which caused filming. Concerning the roller of Comparative Example 3, we think that the reasons for its excellent charging characteristics are that the characteristics were imparted by the benzoguanamine resin contained in the coat layer, whereas the silicon dioxide particles did not improve the characteristics.

(Image-forming Durability Test)

Each of the electrically conductive rollers, produced in the working and comparative examples, was fixed in a contact-type image-forming device (product name: MICROLINE 1032PS, manufactured by Oki Data Corporation) . A copy of a solid image was printed on an A4 size (in accordance with JIS) paper sheet at 23°C and 55% relative humidity. Subsequently, 10,000 copies of a halftone image with a print density of 2% were printed, and then a copy of the solid image was printed again. The difference between the print density of the solid image on the sheet that was printed before the printing of the halftone image and that of the solid image on the sheet that was printed after the printing of the halftone image was measured. When the difference was not more than 0.1, the image-forming durability was graded as Excellent, which is shown as "◎" in Table 1 below. When the difference was from more than 0.1 to not more than 0.2, the image-forming durability was graded as Good, which is shown as "○" in Table 1 below. When the difference was from more than 0.2 to not more than 0.3, the image-forming durability was graded as Fair, which is shown as "○×" in Table 1 below. When the difference was more than 0.3, the image-forming durability was graded as Failure, which is shown as "×" in Table 1 below. The results of the evaluation are shown in Table 1.

(Bleed-out Test)

Each of the electrically conductive rollers, produced in the working and comparative examples, was fixed in a contact-type image-forming device (product name: MICROLINE 1032PS, manufactured by Oki Data Corporation) . A copy of a solid image was printed at 50°C and 90% relative humidity. The print density of this solid image was measured as initial print density. Then, the image-forming device was allowed to stand for 7 days in the test environment, or at 50°C and 90% relative humidity. Subsequently, a copy of the solid image was printed again. The print density of this solid image was measured as after-standing print density. The difference between the initial print density and the after-standing print density was calculated; the value of the after-standing print density was subtracted from that of the initial print density. When the difference was not more than 0.1, it was graded as Excellent, which is shown as "◎" in Table 1 below. When the difference was from more than 0.1 to not more than 0.2, the it was graded as Good, which is shown as "○" in Table 1 below. When the difference was from more than 0.2 to not more than 0.3, it was graded as Fair, which is shown as "○×" in Table 1 below. When the difference was more than 0.3, it was graded as Failure, which is shown as "×" in Table 1 below. When low molecular weight components originating from the elastic layer, such as silicone oligomers, bleed out onto the surface of the urethane coat layer, the difference between the initial print density and the after-standing print density becomes large. If the evaluation is Fair "○×" or better, the amount of the low molecular weight components bled out of the elastic layer is acceptable. The results of the evaluation are shown in Table 1.

[Table 1]

| Table 1 (to be continued) | | | | | |
|---|---|---|---|---|---|
| | Amino resin particulates | | | Coat layer | Properties of ECR[4] |
| | Kind | Amount[3] (parts by mass) | Mean particulate size (μm) | ThickNess (μm) | JIS A hardness |
| W.E. [1] 1 | B[5] | 25 | 12 | 12 | 43 |
| W.E. 2 | B | 10 | 12 | 12 | 43 |
| W.E. 3 | B | 50 | 12 | 12 | 43 |
| W.E. 4 | B | 70 | 12 | 12 | 43 |
| C.E. 4 | U[6] | 25 | 12 | 12 | 43 |
| C.E. 5 | M[7] | 25 | 12 | 12 | 43 |
| W.E. 7 | B | 25 | 12 | 7 | 43 |
| W.E. 8 | B | 25 | 12 | 17 | 43 |
| W.E. 9 | B | 25 | 12 | 22 | 43 |
| C.E.[2] 1 | SD[8] | 25 | 12 | 12 | 40 |
| C.E. 2 | PMMA | 25 | 12 | 12 | 40 |
| C.E. 3 | SD | 25 | 12 | 12 | 46 |

| Table 1 (to be continued) | | | |
|---|---|---|---|
| | Properties of electrically conductive roller | | |
| | Ten-point mean Roughness Rz (μm) | Electric resistance (x $10^6$ Ω) | Charge quantity (μC/g) |
| W.E. 1 | 9.5 | 1 | -40 |
| W.E. 2 | 7.5 | 1 | -35 |
| W.E. 3 | 10 | 1 | -46 |
| W.E. 4 | 11 | 1 | -50 |
| C.E. 4 | 9.5 | 1 | -41 |
| C.E. 5 | 9.5 | 1 | -39 |
| W.E. 7 | 12 | 1 | -42 |
| W.E. 8 | 8 | 1 | -36 |
| W.E. 9 | 7 | 1 | -33 |
| C.E. 1 | 9.5 | 1 | -27 |
| C.E. 2 | 9.5 | 1 | -26 |
| C.E. 3 | 10 | 1 | -48 |

| Table 1 (being continued) | | | | |
|---|---|---|---|---|
| | Evaluation | | | |
| | Filming | Charging characteristics | Printing durability | Bleed out |
| W.E. 1 | ◎ | ○ | ◎ | ◎ |
| W.E. 2 | ◎ | ○ | ◎ | ◎ |

(continued)

| Table 1 (being continued) | | | | |
|---|---|---|---|---|
| | Evaluation | | | |
| | Filming | Charging characteristics | Printing durability | Bleed out |
| W.E. 3 | ○ | ◎ | ○ | ◎ |
| W.E. 4 | ○× | ◎ | ○× | ◎ |
| C.E. 4 | ○ | ○ | ○ | ◎ |
| C.E. 5 | ○ | ○ | ○ | ◎ |
| W.E. 7 | ○ | ◎ | ○ | ◎ |
| W.E. 8 | ○ | ○ | ◎ | ◎ |
| W.E. 9 | ◎ | ○× | ◎ | ◎ |
| C.E. 1 | × | × | × | × |
| C.E. 2 | × | × | × | × |
| C.E. 3 | × | ◎ | × | × |
| Notes:<br>(1) "W.E." stands for Working Example.<br>(2) "C.E." stands for Comparative Example.<br>(3) The "Amount" denotes the amount of the amino resin particulates converted in terms of the total of the mass of the polyisocyanate and that of the polyol when the total is regarded as 100 parts by mass.<br>(4) "ECR" stands for the electrically conductive roller.<br>(5) "B" stands for benzoguanamine.<br>(6) "U" stands for urea.<br>(7) "M" stands for melamine.<br>(8) "SD" stands for silicon dioxide. | | | | |

INDUSTRIAL APPLICABILITY

The electrically conductive roller according to the present invention is suitably used for electrically conductive rollers placed in image-forming devices, such as charge rollers, developing rollers, toner-supplying rollers, transfer rollers, and cleaning rollers. The electrically conductive roller is particularly suitably employed for developing rollers, capable of preventing the occurrence of toner filming for a long time and of providing toners with a desired quantity of electric charge. Also, the development apparatus and the image-forming device according to the present invention are suitably employed for a development apparatus and an image-forming device capable of forming high quality images for a long time.

EXPLANATION OF PREFERENCE NUMERALS

| | |
|---|---|
| 1 | electrically conductive roller |
| 2 | shaft |
| 3 | elastic layer |
| 4 | urethane coat layer |
| 5 | particulate amino resin |
| 6 | transfer and convey belt |
| 10 | image-forming device |
| 11B, 11C, 11M, 11Y | image carrier |
| 12B, 12C, 12M, 12Y | static charger |
| 13B, 13C, 13M, 13Y | exposing device |
| 14B, 14C, 14M, 14Y | transfer device |

| 15B, 15C, 15M, 15Y | cleaner |
| 16 | recording material |
| 20 | development apparatus |
| 21B, 21C, 21M, 21Y, 34 | housing |
| 22B, 22C, 22M, 22Y | toner |
| 23B, 23C, 23M, 23Y | toner carrier |
| 24B, 24C, 24M, 24Y | toner-amount adjuster |
| 30 | fixing device |
| 31 | fixing roller |
| 32 | pressure roller |
| 33 | endless belt-supporting roller |
| 35 | opening |
| 36 | endless belt |
| 41 | cassette |
| 42 | supporting roller |
| B, C, M, Y | developing unit |

**Claims**

1. An electrically conductive roller for an electrophotographic image-forming device comprising a urethane coat layer containing a urethane resin and a guanamine resin in a form of particulates in an amount from 10 to 70 parts by mass to 100 parts by mass of the urethane resin, the urethane coat layer formed on an outer circumferential face of an elastic layer.

2. The electrically conductive roller according to claim 1, wherein the guanamine resin contains benzoguanamine resin.

3. A development apparatus equipped with the electrically conductive roller according to claim 1 or 2.

4. An image-forming apparatus equipped with the electrically conductive roller according to claim 1 or 2.

**Patentansprüche**

1. Elektrisch leitfähige Walze für eine elektrophotographische Bilderzeugungsvorrichtung, die eine Urethan-Überzugsschicht umfasst, welche ein Urethanharz und ein Guanaminharz in Form von Partikeln in einer Menge von 10 bis 70 Massenteilen pro 100 Massenteile des Urethanharzes enthält, wobei die Urethanüberzugsschicht an einer äußeren Umfangsfläche einer elastischen Schicht ausgebildet ist.

2. Elektrisch leitfähige Walze gemäß Anspruch 1, wobei das Guanaminharz Benzoguanaminharz enthält.

3. Entwicklungsvorrichtung, die mit der elektrisch leitfähigen Walze gemäß Anspruch 1 oder 2 ausgestattet ist.

4. Bilderzeugungsvorrichtung, die mit der elektrisch leitfähigen Walze gemäß Anspruch 1 oder 2 ausgestattet ist.

**Revendications**

1. Rouleau électriquement conducteur pour un dispositif de formation d'image électrophotographique comprenant une couche de revêtement d'uréthane contenant une résine uréthane et une résine guanamine sous la forme de particules dans une quantité de 10 à 70 parties en masse à 100 parties en masse de la résine uréthane, la couche de revêtement d'uréthane étant formée sur une face circonférentielle externe d'une couche élastique.

2. Rouleau électriquement conducteur selon la revendication 1, dans lequel la résine guanamine contient une résine benzoguanamine.

3. Appareil de développement équipé du rouleau électriquement conducteur selon la revendication 1 ou 2.

**4.** Appareil de formation d'image équipé du rouleau électriquement conducteur selon la revendication 1 ou 2.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006163042 A
- JP 3805563 B
- JP 4240119 B
- JP H08286470 A
- US 2004170449 A1
- US 2007197362 A1
- JP 2007233367 A
- JP 2008058622 A

**Non-patent literature cited in the description**

- *JIS K6253,* 1993
- *JIS B 0601,* 1984